# EUROPÄISCHE PATENTANMELDUNG

(11) **EP 4 056 658 A1**
(43) Veröffentlichungstag der Anmeldung: **14.09.2022**
(21) Anmeldenummer: 22161503.2
(22) Anmeldetag: 11.03.2022
(51) Int. Cl.: C09D 11/101, C09D 11/38, C09D 11/03

(54) **STRAHLUNGSHÄRTBARE ZUSAMMENSETZUNG**

(30) Priorität: 12.03.2021 DE 102021202423; 12.03.2021 DE 202021101262 U
(71) Anmelder: Marabu GmbH & Co. KG, 71732 Tamm (DE)
(72) Erfinder: Brückner, Christine, 71701 Schwieberdingen (DE); Volkmann, Jürgen, 73779 Deizisau (DE)
(74) Vertreter: Patentanwälte Ruff, Wilhelm, Beier, Dauster & Partner mbB

(57) **Zusammenfassung**

Die Erfindung betrifft eine strahlungshärtbare Zusammensetzung, aufweisend
- wenigstens ein reaktives Monomer und/oder wenigstens ein reaktives Oligomer und
- wenigstens eine Photoinitiatorverbindung,
wobei die Zusammensetzung frei von einer Acylphosphinoxidverbindung ist unddie wenigstens eine Photoinitiatorverbindung nachfolgende Formel I besitzt: 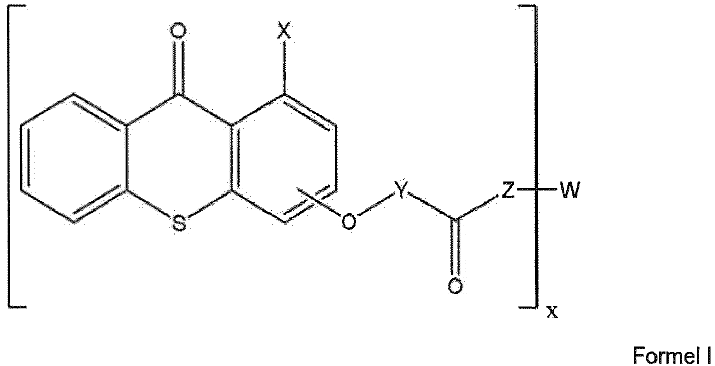 wobei
- X ein Halogenatom bedeutet,
- Y eine Alkylen- oder Alkenylengruppe bedeutet,
- Z eine Gruppe der Formel -[OCH₂CH₂]_{y}-, -[OCH₂CH₂CH₂CH₂]_{y}- oder -[OCH(CH₃)CH₂]_{y}-, wobei y eine ganze Zahl von 1 bis 20 bedeutet, oder eine Gruppe der Formel -[O(CH₂)_{b}CO]_{y}- oder -[O(CH₂)_{b}CO]_{(y-1)}-[O(CHR"CHR')ₐ]-bedeutet, wobei b eine ganze Zahl von 4 bis 5 und y eine ganze Zahl von 1 bis 20 bedeutet,
- W einen Rest einer Polyhydroxyverbindung bedeutet und
- x eine ganze Zahl größer 1 bedeutet, wobei an die Gruppe W gebundene Gruppierungen gleich oder voneinander verschieden sein können.

Die Erfindung betrifft ferner ein Verfahren zum Beschichten eines Substrates, ein mit der strahlungshärtbaren Zusammensetzung beschichtetes Substrat sowie ein Kit.

## Beschreibung

### ANWENDUNGSGEBIET UND STAND DER TECHNIK

Die Erfindung betrifft eine strahlungshärtbare, vorzugsweise UV-härtbare, Zusammensetzung, ein Verfahren zum Beschichten eines Substrates, ein Substrat, das wenigstens teilweise mit der Zusammensetzung beschichtet, insbesondere bedruckt, ist, ein Kit sowie einen Tintensatz.

UV-härtbare Tintenzusammensetzungen, insbesondere zum Bedrucken von Lebensmittelverpackungen, werden üblicherweise mit hochmolekularen Bestandteilen, insbesondere polymere Photoinitiatoren, formuliert, da diese aufgrund ihrer Molmassen eine geringere Tendenz zum Migrieren durch Verpackungsmaterialien aufweisen. Auf diese Weise können zwar migrationsarme UV-härtbare Tintenzusammensetzungen bereitgestellt werden. Die Verwendung hochmolekularer Bestandteile führt jedoch oftmals zu Nachteilen bezüglich der Reaktivität, Haftung und Beständigkeit von Tintenzusammensetzungen sowie deren Verdruckbarkeit, insbesondere bei Verwendung von Piezo-Druckköpfen. Ferner ist problematisch, dass die Rolle von in den Tintenzusammensetzungen enthaltenen Monomeren beim Migrationsgeschehen oftmals unterschätzt oder nicht ausreichend berücksichtigt. Um eine migrationsarme Tintenzusammensetzung bereitzustellen, ist daher eine möglichst vollständige Polymerisation der Monomere unabdingbar. Um dies zu erreichen, wird mit großen Anteilen an Acylphosphinoxid-Photoinitiatoren gearbeitet, üblicherweise mit einem Anteil von > 10 Gew.-%, bezogen auf das Gesamtgewicht der jeweiligen Tintenzusammensetzung. AcylphosphinoxidVerbindungen haben indes den Nachteil, dass sie im Verdacht stehen, reprotoxisch zu wirken, weswegen ihre Verwendung beispielsweise für das Bedrucken von Lebensmittelverpackungen oder Spielzeugen zunehmend umstritten ist. Besonders kritisch werden hier Diphenylacylphosphine gesehen.

### AUFGABE UND LÖSUNG

Die Erfindung stellt sich daher die Aufgabe, eine strahlungshärtbare, vorzugsweise UV-härtbare, Zusammensetzung bereitzustellen, die die eingangs im Zusammenhang konventioneller Tintenzusammensetzungen genannten Nachteile wenigstens teilweise umgeht. Weiter stellt sich die Erfindung die Aufgabe, ein Verfahren zum Beschichten eines Substrats, ein mit der strahlungshärtbaren, insbesondere UV-härtbaren, Zusammensetzung beschichtetes Substrat, ein Kit sowie einen Tintensatz bereitzustellen.

Diese Aufgaben werden gelöst durch eine strahlungshärtbare Zusammensetzung mit den Merkmalen des unabhängigen Anspruchs 1 sowie durch ein Verfahren, ein Substrat, ein Kit und einen Tintensatz, wie in der Beschreibung offenbart. Bevorzugte Ausgestaltungen der strahlungshärtbaren Zusammensetzung sind in den abhängigen Ansprüchen sowie in der Beschreibung definiert. Der Wortlaut sämtlicher Ansprüche wird hiermit durch Bezugnahme ausdrücklich zum Inhalt dieser Beschreibung gemacht.

Gemäß einem ersten Aspekt betrifft die Erfindung eine strahlungshärtbare, vorzugsweise UV-härtbare oder UV-härtende, Zusammensetzung, aufweisend
- wenigstens ein reaktives Monomer und/oder wenigstens ein reaktives Oligomer und
- wenigstens eine Photoinitiatorverbindung.

Die strahlungshärtbare, vorzugsweise UV-härtbare, Zusammensetzung ist frei von einer Diphenylacylphosphinoxidverbindung oder Diphenylmonoacylphosphinoxidverbindung, insbesondere Diarylacylphosphinoxidverbindung oder Diarylmonoacylphosphinoxidverbindung.

Die oben genannte wenigstens eine Photoinitiatorverbindung besitzt nachfolgende Formel I 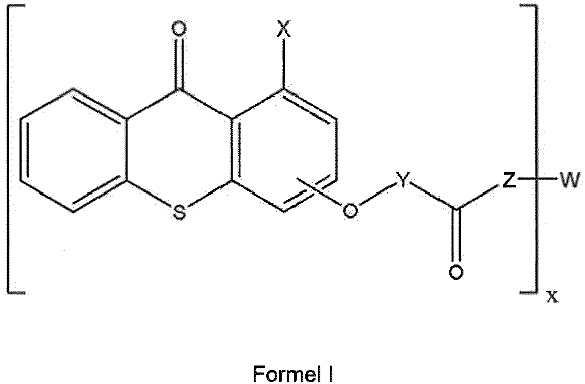 wobei
- X ein Halogenatom bedeutet,
- Y eine Alkylen- oder Alkenylengruppe bedeutet,
- Z eine Gruppe der Formel -[OCH₂CH₂]_{y}-, -[OCH₂CH₂CH₂CH₂]_{y}- oder -[OCH(CH₃)CH₂]_{y}-, wobei y eine Zahl, insbesondere eine ganze Zahl, von 1 bis 20, insbesondere 1 bis 10, bedeutet, oder Z eine Gruppe der Formel -[O(CH₂)_{b}CO]_{y}- oder -[O(CH₂)_{b}CO]_{(y-1)}-[O(CHR"CHR')ₐ]- bedeutet, wobei b eine Zahl, insbesondere eine ganze Zahl, von 4 bis 5 und y eine Zahl, insbesondere eine ganze Zahl, von 1 bis 20, insbesondere 1 bis 10, bedeutet,
- W einen Rest einer Polyhydroxyverbindung bedeutet und
- x eine Zahl, insbesondere eine ganze Zahl, von > (gesprochen: größer) 1 bedeutet, wobei an die Gruppe W gebundene Gruppierungen gleich oder voneinander verschieden sein können.

Bei der strahlungshärtbaren, vorzugsweise UV-härtbaren, Zusammensetzung handelt es sich vorzugsweise um eine strahlungshärtbare, vorzugsweise UV-härtbare, Tintenzusammensetzung.

Alternativ kann es sich bei der strahlungshärtbaren, vorzugsweise UV-härtbaren, Zusammensetzung bevorzugt um eine Lackzusammensetzung, insbesondere Klarlackzusammensetzung, handeln.

Unter dem Ausdruck "strahlungshärtbare, vorzugsweise UV-härtbare, Zusammensetzung" soll im Sinne der vorliegenden Erfindung eine Zusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "strahlungshärtbare, vorzugsweise UV-härtbare, Tintenzusammensetzung" soll im Sinne der vorliegenden Erfindung eine Tintenzusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "strahlungshärtbare, vorzugsweise UV-härtbare, Lackzusammensetzung" soll im Sinne der vorliegenden Erfindung eine Lackzusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "strahlungshärtbare, vorzugsweise UV-härtbare, Klarlackzusammensetzung" soll im Sinne der vorliegenden Erfindung eine Klarlackzusammensetzung verstanden werden, die unter Einwirkung von elektromagnetischer Strahlung, vorzugsweise ultravioletter Strahlung (UV-Strahlung), ausgehärtet werden kann.

Unter dem Ausdruck "Klarlackzusammensetzung" soll im Sinne der vorliegenden Erfindung eine transparente, d.h. lichtdurchlässige, insbesondere für elektromagnetische Strahlung oder elektromagnetische Wellen mit einer Wellenlänge von 380 nm bis 700 nm durchlässige, Lackzusammensetzung verstanden werden.

Unter dem Ausdruck "Lackzusammensetzung" soll im Sinne der vorliegenden Erfindung eine Beschichtungszusammensetzung verstanden werden, die, vorzugsweise dünn, auf Gegenstände aufgetragen wird und durch chemische und/oder physikalische Vorgänge, wie beispielsweise Verdampfen eines Lösungsmittels, zu einem Film, insbesondere durchgehenden, festen Film, aufgebaut wird.

Unter dem Ausdruck "ultraviolette Strahlung (UV-Strahlung)" soll im Sinne der vorliegenden Erfindung vorzugsweise eine Strahlung in einem Wellenlängenbereich von 100 nm bis 450 nm, insbesondere 100 nm bis 420 nm, verstanden werden.

Der Ausdruck "wenigstens ein reaktives Monomer" kann im Sinne der vorliegenden Erfindung ein reaktives Monomer, d.h. ein Typ eines reaktiven Monomers, oder eine Vielzahl von unterschiedlichen reaktiven Monomeren, d.h. zwei oder mehr unterschiedliche reaktive Monomere, bedeuten. Dementsprechend kann die strahlungshärtbare, vorzugsweise UV-härtbare, Zusammensetzung beispielsweise nur ein reaktives Monomer, d.h. nur einen Typ eines reaktiven Monomers oder eine Kombination oder Mischung von unterschiedlichen reaktiven Monomeren aufweisen.

Unter dem Ausdruck "reaktives Monomer" soll im Sinne der vorliegenden Erfindung ein Monomer verstanden werden, das bei Einwirkung von elektromagnetischer Strahlung, vorzugsweise ultravioletter Strahlung (UV-Strahlung), insbesondere in Gegenwart von Photoinitiatoren, zur Reaktion gebracht werden kann und insbesondere an Polymerisationsreaktionen, vorzugsweise radikalischen Polymerisationsreaktionen, und/oder Vernetzungsreaktionen unter teilweiser oder vollständiger Aushärtung der erfindungsgemäßen Zusammensetzung teilnehmen kann. Vorzugweise handelt es sich bei dem "reaktiven Monomer" im Sinne der vorliegenden Erfindung um ein bei Einwirkung von elektromagnetischer Strahlung, vorzugsweise ultravioletter Strahlung (UV-Strahlung), insbesondere in Gegenwart von Photoinitiatoren, polymerisierbares Monomer. Alternativ oder zusätzlich kann das "reaktive Monomer" zur Einstellung der Viskosität, insbesondere einer für eine digitale Verdruckbarkeit geeigneten Viskosität, der erfindungsgemäßen Zusammensetzung vorgesehen sein.

Der Ausdruck "wenigstens ein reaktives Oligomer" kann im Sinne der vorliegenden Erfindung ein reaktives Oligomer, d.h. ein Typ eines reaktiven Oligomers, oder eine Vielzahl von unterschiedlichen reaktiven Oligomeren, d.h. zwei oder mehr unterschiedliche reaktive Oligomere, bedeuten. Dementsprechend kann die strahlungshärtbare, vorzugsweise UV-härtbare, Zusammensetzung beispielsweise nur ein reaktives Oligomer, d.h. nur einen Typ eines reaktiven Oligomers oder eine Kombination oder Mischung von unterschiedlichen reaktiven Oligomeren aufweisen.

Unter dem Ausdruck "reaktives Oligomer" soll im Sinne der vorliegenden Erfindung ein Oligomer verstanden werden, das bei Einwirkung von elektromagnetischer Strahlung, vorzugsweise ultravioletter Strahlung (UV-Strahlung), insbesondere in Gegenwart von Photoinitiatoren, zur Reaktion gebracht werden kann und insbesondere an Polymerisationsreaktionen, vorzugsweise radikalischen Polymerisationsreaktionen, und/oder Vernetzungsreaktionen unter teilweiser oder vollständiger Aushärtung der erfindungsgemäßen Zusammensetzung teilnehmen kann. Vorzugweise handelt es sich bei dem "reaktiven Oligomer" im Sinne der vorliegenden Erfindung um ein bei Einwirkung von elektromagnetischer Strahlung, vorzugsweise ultravioletter Strahlung (UV-Strahlung), insbesondere in Gegenwart von Photoinitiatoren, polymerisierbares Oligomer. Alternativ oder zusätzlich kann das "reaktive Oligomer" zur Einstellung der Viskosität, insbesondere einer für eine digitale Verdruckbarkeit geeigneten Viskosität, der erfindungsgemäßen Zusammensetzung vorgesehen sein.

Der Ausdruck "wenigstens eine Acylphosphinoxidverbindung" kann im Sinne der vorliegenden Erfindung eine Acylphosphinoxidverbindung, d.h. ein Typ einer Acylphosphinoxidverbindung, oder eine Vielzahl von unterschiedlichen Acylphosphinoxidverbindungen, d.h. zwei oder mehr unterschiedliche Acylphosphinoxidverbindungen, bedeuten. Dementsprechend kann die strahlungshärtbare, vorzugsweise UV-härtbare, Zusammensetzung beispielsweise nur eine Acylphosphinoxidverbindung d.h. nur einen Typ einer Acylphosphinoxidverbindung oder eine Kombination oder Mischung von unterschiedlichen Acylphosphinoxidverbindungen aufweisen, wobei, wie bereits erwähnt, erfindungsgemäß Diphenylacylphosphinoxidverbindungen, insbesondere Diarylacylphosphinoxidverbindungen, ausgenommen sind.

Der Ausdruck "wenigstens eine Monoacylphosphinoxidverbindung" kann im Sinne der vorliegenden Erfindung eine Monoacylphosphinoxidverbindung, d.h. ein Typ einer Monoacylphosphinoxidverbindung, oder eine Vielzahl von unterschiedlichen Monoacylphosphinoxidverbindungen, d.h. zwei oder mehr unterschiedliche Monoacylphosphinoxidverbindungen, bedeuten. Dementsprechend kann die strahlungshärtbare, vorzugsweise UV-härtbare, Zusammensetzung beispielsweise nur eine Monoacylphosphinoxidverbindung d.h. nur einen Typ einer Monoacylphosphinoxidverbindung oder eine Kombination oder Mischung von unterschiedlichen Monoacylphosphinoxidverbindungen aufweisen, wobei, wie bereits erwähnt, erfindungsgemäß Diphenylmonoacylphosphinoxidverbindungen, insbesondere Diarylmonoacylphosphinoxidverbindungen, ausgenommen sind.

Unter dem Ausdruck "Monoacylphosphinoxidverbindung" soll im Sinne der vorliegenden Erfindung eine Verbindung der nachfolgenden Formel III verstanden werden: 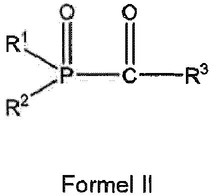 wobei R¹, R² und R³ unabhängig voneinander einen organischen Rest bedeuten. Insbesondere können R¹ und R² unabhängig voneinander einen aliphatischen Rest, insbesondere Alkyl-Rest, einen aromatischen Rest (Aryl-Rest), einen Alkoxy-Rest, einen Aryloxy-Rest oder einen heterocyclischen Rest bedeuten, jedoch mit der Maßgabe, dass R¹ und R² jeweils keinen Phenylrest, insbesondere keinen Arylrest, bedeuten. Alternativ können R¹ und R² zusammen einen fünf- bis neungliedrigen Ring bilden und der Ring kann ein Sauerstoffatom, ein Stickstoffatom oder ein Schwefelatom aufweisen. R³ kann insbesondere einen aliphatischen Rest, insbesondere Alkyl-Rest, einen aromatischen Rest oder einen heterocyclischen Rest bedeuten. Bei den vorgenannten Resten kann es sich grundsätzlich um substituierte oder unsubstituierte Reste handeln.

Unter dem Ausdruck "Diphenylacylphosphinoxidverbindung" oder "Diphenylmonoacylphosphinoxidverbindung" soll im Sinne der vorliegenden Erfindung eine Verbindung der nachfolgenden Formel IIa verstanden werden: 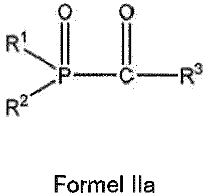 wobei R¹, R² jeweils einen Phenylrest bedeuten und R³ unabhängig hiervon einen organischen Rest, insbesondere einen aliphatischen Rest, wie beispielsweise Alkyl-Rest, aromatischen Rest (Aryl-Rest), insbesondere unsubstituierten oder substituierten aromatischen Rest, oder einen heterocyclischen Rest bedeutet. Bei den vorgenannten Resten kann es sich grundsätzlich um substituierte oder unsubstituierte Reste handeln.

Unter dem Ausdruck "Diarylacylphosphinoxidverbindung" oder "Diarylmonoacylphosphinoxidverbindung" soll im Sinne der vorliegenden Erfindung eine Verbindung der nachfolgenden Formel IIb verstanden werden: 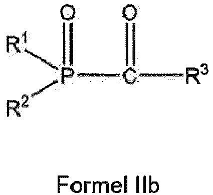 wobei R¹, R² jeweils einen Arylrest, wie beispielsweise Phenylrest, bedeuten und R³ unabhängig hiervon einen organischen Rest, insbesondere einen aliphatischen Rest, wie beispielsweise Alkyl-Rest, aromatischen Rest (Aryl-Rest) oder einen heterocyclischen Rest bedeutet. Bei den vorgenannten Resten kann es sich grundsätzlich um substituierte oder unsubstituierte Reste handeln.

Der Ausdruck "wenigstens eine Bisacylphosphinoxidverbindung" kann im Sinne der vorliegenden Erfindung eine Bisacylphosphinoxidverbindung, d.h. ein Typ einer Bisacylphosphinoxidverbindung, oder eine Vielzahl von unterschiedlichen Bisacylphosphinoxidverbindungen, d.h. zwei oder mehr unterschiedliche Bisacylphosphinoxidverbindungen, bedeuten. Dementsprechend kann die strahlungshärtbare, vorzugsweise UV-härtbare, Zusammensetzung beispielsweise nur eine Bisacylphosphinoxidverbindung d.h. nur einen Typ einer Bisacylphosphinoxidverbindung oder eine Kombination oder Mischung von unterschiedlichen Bisacylphosphinoxidverbindungen aufweisen.

Unter dem Ausdruck "Bisacylphosphinoxidverbindung" soll im Sinne der vorliegenden Erfindung eine Verbindung der nachfolgenden Formel III verstanden werden 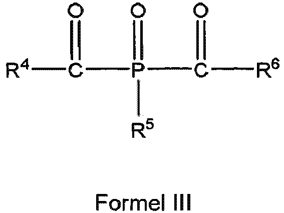 wobei R⁴, R⁵ und R⁶ unabhängig voneinander einen organischen Rest bedeuten. Insbesondere können R⁴ und R⁶ unabhängig voneinander einen aliphatischen Rest, insbesondere Alkyl-Rest, einen aromatischen Rest (Aryl-Rest), einen Alkoxy-Rest, einen Aryloxy-Rest oder einen heterocyclischen Rest und R⁵ einen aliphatischen Rest, insbesondere Alkyl-Rest, einen Aryl-Rest, einen Alkoxy-Rest, einen Aryloxy-Rest oder einen heterocyclischen Rest bedeuten. Bei den vorgenannten Resten kann es sich grundsätzlich um substituierte oder unsubstituierte Reste handeln.

Der Ausdruck "wenigstens eine Photoinitiatorverbindung" kann im Sinne der vorliegenden Erfindung eine Photoinitiatorverbindung, d.h. ein Typ einer Photoinitiatorverbindung, oder eine Vielzahl von unterschiedlichen Photoinitiatorverbindungen, d.h. zwei oder mehr unterschiedliche Photoinitiatorverbindungen, bedeuten. Dementsprechend kann die strahlungshärtbare, vorzugsweise UV-härtbare, Zusammensetzung beispielsweise nur eine Photoinitiatorverbindung, d.h. nur einen Typ einer Photoinitiatorverbindung oder eine Kombination oder Mischung von unterschiedlichen Photoinitiatorverbindungen aufweisen.

Unter dem Ausdruck "Photoinitiator vom Norrish Typ I" soll im Sinne der vorliegenden Erfindung ein Photoinitiator verstanden werden, der bei Einwirkung von elektromagnetischer Strahlung, vorzugsweise ultravioletter Strahlung (UV-Strahlung), in zwei Radikale zerfällt, meist durch eine sogenannte α-Spaltung. Die gebildeten Radikale können eine Kettenpolymerisation und/oder Vernetzung unter teilweiser oder vollständiger Aushärtung der strahlungshärtbaren, vorzugsweise UV-härtbaren, Zusammensetzung auslösen.

Unter dem Ausdruck "Photoinitiator vom Norrish Typ II" soll im Sinne der vorliegenden Erfindung ein Photoinitiator verstanden werden, der in der Lage ist, ein Wasserstoffatom von einem benachbarten Molekül zu abstrahieren. Dieses kann dann eine Kettenpolymerisation und/oder Vernetzung unter teilweiser oder vollständiger Aushärtung der strahlungshärtbaren, vorzugsweise UV-härtbaren, Zusammensetzung auslösen.

Die Erfindung beruht insbesondere auf dem überraschenden Befund, dass eine Photoinitiatorverbindung der Formel I in der Lage ist, Diphenylacylphosphinoxidverbindungen, insbesondere Diarylacylphosphinoxidverbindungen, als Photoinitiatoren in strahlungshärtbaren, vorzugsweise UV-härtbaren, Zusammensetzungen zu ersetzen. Dadurch ist vorteilhafterweise eine Formulierung von strahlungshärtbaren, vorzugsweise UV-härtbaren, Zusammensetzungen ohne Diphenylacylphosphinoxidverbindungen, insbesondere Diarylacylphosphinoxidverbindungen, erzielbar. Wahlweise können die Zusammensetzungen einen stark reduzierten Anteil von anderen Acylphosphinoxidverbindungen aufweisen. Dies wiederum erlaubt eine Verwendung der erfindungsgemäßen Zusammensetzung auch zum Beschichten, insbesondere Bedrucken, von Substraten, die unter gesundheitlichen Aspekten besonders sensibel sind, wie beispielsweise Lebensmittelverpackungen und Spielzeuge.

Ferner kann die Erfindung die Verwendung von langkettigen polymeren Bestandteilen, wie beispielsweise polymeren Photoinitiatoren, entbehrlich machen oder wenigstens die Verwendung von reduzierten Anteilen derartiger Bestandteile ermöglichen. Dadurch lassen sich vorteilhafterweise nicht nur die Viskositätseigenschaften der erfindungsgemäßen Zusammensetzung optimieren, sondern auch der Anteil des wenigstens einen reaktiven Monomers, insbesondere zur Viskositätseinstellung, reduzieren. Dies kann insoweit vorteilhaft sein, als dass sich manche Monomere als aggressiv gegenüber in Druckern, insbesondere Tintenstrahldruckern, verwendeten Materialien herausgestellt haben. Zum Beispiel kommt Acryloylmorpholin wegen seiner niedrigen Viskosität bei der Formulierung von Tintenzusammensetzungen vielfach zur Anwendung, wirft jedoch aufgrund seiner chemischen Aggressivität häufig Materialkompatibilitätsprobleme auf.

Ferner hat sich vorteilhafterweise gezeigt, dass der Ersatz von Diphenylacylphosphinoxidverbindungen, insbesondere Diarylacylphosphinoxidverbindungen, durch eine Photoinitiatorverbindung der Formel I bei der Formulierung von strahlungshärtbaren, vorzugsweise UV-härtbaren, Zusammensetzungen ohne Erhöhung des Migrationsrisikos sowie ohne Beeinträchtigung der Reaktivität, Haftung, Beständigkeit sowie Bedruckbarkeit der Zusammensetzungen möglich ist. Abgesehen davon kann die zusätzliche Verwendung eines geringen Anteils von anderen Acylphosphinoxidverbindungen die Verwendung von Standard-Monomeren, wie beispielsweise 2-Phenoxyethylacrylat und/oder Acryloylmorpholin, erleichtern oder ermöglichen, ohne dass hierdurch die Reaktivität der Zusammensetzungen beeinträchtigt wird. Bezüglich geeigneter Acylphosphinoxidverbindungen sowie derer Anteile wird auf die noch folgende Beschreibung Bezug genommen.

Grundsätzlich kann die strahlungshärtbare, vorzugsweise UV-härtbare, Zusammensetzung abgesehen von der wenigstens einen Photoinitiatorverbindung der Formel I keine weitere Photoinitiatorverbindung aufweisen.

In Ausgestaltung der Erfindung weist die strahlungshärtbare, vorzugsweise UV-härtbare, Zusammensetzung ferner wenigstens eine Acylphosphinoxidverbindung, insbesondere wenigstens eine Monoacylphosphinoxidverbindung und/oder wenigstens eine Bisacylphosphinoxidverbindung, auf. Die wenigstens eine Acylphosphinoxidverbindung ist vorzugsweise ausgewählt aus der Gruppe bestehend aus Ethyl-(2,4,6-Trimethylbenzoyl)phenylphosphinat, Isobutyldibenzoylphosphinoxid, 1- Methyl-(2,6-dimethoxybenzoyl)phenylphosphinoxid, Methylisobutyrylmethyl-phosphinat, Isopropylpivaloylphenylphosphinat, Methyl-p-toluoylphenylphosphinat, Methyl-o-toluoylphenylphosphinat, Isopropyl-p-tert-butylbenzoylphenylphosphinat, Methyl-acryloylphenylphosphinat, o-Toluoylphenylphosphinoxid, Vinyl-pivaloylphenylphosphinat, Methyl-pivaloylphenylphosphinat, Isopropyl-pivaloylphenylphosphinat, Bis(2,6-dichlorobenzoyl)phenylphosphinoxid, Bis(2,6-dichlorobenzoyl)-2,5-dimethylphenylphosphinoxid, Bis(2,6-dichlorobenzoyl)-4-ethoxy-phenylphosphinoxid, Bis(2,6-dichlorobenzoyl)-4-propylphenylphosphinoxid, Bis(2,6- dichloro-benzoyl)-2-naphtylphosphinoxid, Bis(2,6-dichlorobenzoyl)-1-naphtylphosphinoxid, Bis(2,6-dichlorobenzoyl)-4-chlorophenylphosphinoxid, Bis(2,6-dichlorobenzoyl)-2,4-dimethoxyphenylphosphinoxid, Bis(2,6-dichlorobenzoyl)ethylphosphinoxid, Bis(2,6-dichlorobenzoyl)-4-octylphenylphosphinoxid, Bis(2,4,6-trimethylbenzoyl)phenylphosphinoxid, Bis(2,4,6-trimethylbenzoyl)-2,5-dimethylphenylphosphinoxid, Bis(2,6-dichloro-3,4,5-trimethoxybenzoyl)-2,5-dimethylphenylphosphinoxid, Bis(2,6-dichloro-3,4,5-trimethoxybenzoyl)-4-ethoxyphenylphosphinoxid, Bis(2-methyl-1-naphthyl)-2,5-dimethylphenylphospinoxid, Bis(2-methyl-1-naphthyl)-4-ethoxyphenylphosphinoxid, Bis(2-methyl-1-naphthyl)-2-naphthylphosphinoxid, Bis(2-methyl-1-naphthyl)-4-propylphenylphosphinoxid, Bis(2-methyl-1-naphthyl)-2,5-trimethylphenylphosphinoxid, Bis(2-methoxy-1-naphthyl)-4-ethoxyphenylphosphinoxid, Bis(2-chloro-1-naphthyl)-2,5-dimethylphenylphosphinoxid, Bis(2,6-dimethoxybenzoyl)-2,4,6-trimethylpentylphosphinoxid und Mischungen von wenigstens zwei der vorgenannten Acylphosphinoxidverbindungen, insbesondere Monoacylphosphinoxidverbindungen und/oder Bisacylphosphinoxidverbindungen.

In weiterer Ausgestaltung der Erfindung weist die wenigstens eine Acylphosphinoxidverbindung, insbesondere wenigstens eine Monoacylphosphinoxidverbindung und/oder wenigstens eine Bisacylphosphinoxidverbindung, einen Anteil von 0,1 Gew.-% bis 15 Gew.-%, insbesondere 0,1 Gew.-% bis 10 Gew.-%, bevorzugt 0,1 Gew.-% bis 6 Gew.-%, besonders bevorzugt 0,1 Gew.-% bis 4 Gew.-%, auf, bezogen auf das Gesamtgewicht der strahlungshärtbaren, vorzugsweise UV-härtbaren, Zusammensetzung. Insbesondere durch die in diesem Absatz erwähnten Anteile für die wenigstens eine Acylphosphinoxidverbindung können den im Zusammenhang von Acylphosphinoxidverbindungen diskutierten gesundheitlichen Risiken in besonderer Weise begegnet werden.

Ferner kann es bevorzugt sein, dass die strahlungshärtbare, vorzugsweise UV-härtbare, Zusammensetzung abgesehen von der wenigstens einen Photoinitiatorverbindung der Formel I und der wenigstens einen Acylphosphinoxidverbindung, insbesondere wenigstens einen Monoacylphosphinoxidverbindung und/oder wenigstens einen Bisacylphosphinoxidverbindung, keine weitere Photoinitiatorverbindung aufweist.

In weiterer Ausgestaltung der Erfindung bedeutet X in der Formel I ein Chloratom.

Alternativ kann X in der Formel I ein Fluor-, Brom- oder lodatom bedeuten.

Grundsätzlich kann Y in der Formel I eine Alkylen- oder Alkenylengruppe mit einem Kohlenstoffatom bis zwölf Kohlenstoffatomen, insbesondere einem Kohlenstoffatom bis zehn Kohlenstoffatomen, vorzugsweise einem Kohlenstoffatom bis sechs Kohlenstoffatomen, bedeuten.

In weiterer Ausgestaltung der Erfindung bedeutet Y in der Formel I eine Methylengruppe, d.h. eine -CH₂-Gruppe.

In weiterer Ausgestaltung der Erfindung bedeutet Z in der Formel I eine Gruppe -[OCH(CH₃)CH₂]_{y}-, wobei y eine Zahl, insbesondere eine ganze Zahl, von 1 bis 20, insbesondere 1 bis 10, bedeutet.

In weiterer Ausgestaltung der Erfindung bedeutet W in der Formel I einen Rest von Pentaerythrit, d.h. einen Rest von 2,2-Bis(hydroxymethyl)-1,3-propandiol.

Alternativ kann W in der Formel I einen Rest von Ethylenglykol, Propylenglykol, Butylenglykol, Glycerin, Trimethylolpropan, Ditrimethylolpropan oder Dipentaerythrit bedeuten.

In weiterer Ausgestaltung der Erfindung ist die Gruppierung -YCO-Z- in der wenigstens einen Photoinitiatorverbindung der Formel I in einer para-Position relativ zur Position von X an die Thioxanthongruppierung gebunden.

In weiterer Ausgestaltung der Erfindung weist die wenigstens eine Photoinitiatorverbindung ein Molekulargewicht von < 2.000 g/mol auf. Beispielsweise kann die wenigstens eine Photoinitiatorverbindung ein Molekulargewicht von < 1.500 g/mol, insbesondere < 1.000 g/mol, insbesondere < 800 g/mol, aufweisen. Bevorzugt weist die wenigstens eine Photoinitiatorverbindung jedoch ein Molekulargewicht von wenigstens 200 g/mol, insbesondere von wenigstens 400 g/mol, vorzugsweise von wenigstens 600 g/mol, auf. Besonders bevorzugt weist die wenigstens eine Photoinitiatorverbindung ein Molekulargewicht von 1.500 g/mol bis < 2.000 g/mol, insbesondere 1.600 g/mol bis < 2.000 g/mol, bevorzugt 1.700 g/mol bis < 2.000 g/mol, besonders bevorzugt 1.800 g/mol bis < 2.000 g/mol, auf.

In weiterer Ausgestaltung der Erfindung besitzt die wenigstens eine Photoinitiatorverbindung nachfolgende Formel Ia 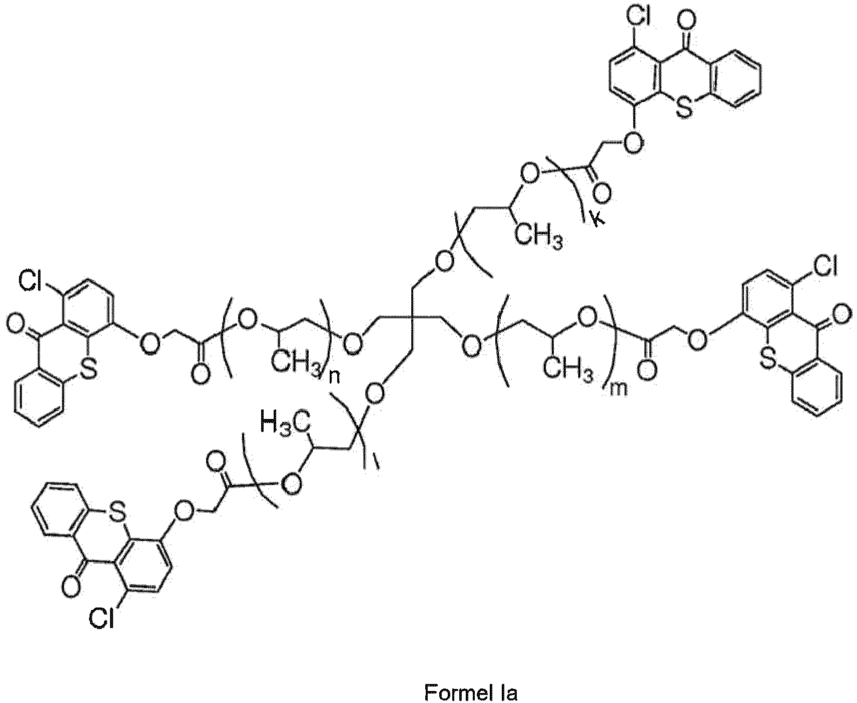 wobei k, l, m und n unabhängig voneinander jeweils eine Zahl, insbesondere eine ganze Zahl, von 1 bis 20 bedeuten.

Bei der wenigstens einen Photoinitiatorverbindung der Formel Ia handelt es sich um einen Photoinitiator, der unter der CAS-Nummer 1003567-83-6 sowie unter der Bezeichnung "SpeedCure 7010" kommerziell erhältlich ist. Es handelt sich hierbei ferner um einen Photoinitiator, insbesondere polymeren Photoinitiator, vom Norrish Typ II. Der Photoinitiator besitzt vorzugsweise Absorptionsmaxima bei 257 nm, 312 nm sowie 383 nm.

Die erfindungsgemäßen Vorteile kommen bei der Verwendung der wenigstens einen Photoinitiatorverbindung der Formel la besonders stark zur Geltung.

In weiterer Ausgestaltung der Erfindung weist die wenigstens eine Photoinitiatorverbindung der Formel I, insbesondere der Formel la, einen Anteil von < (gesprochen: kleiner) 3 Gew.-%, insbesondere 0,1 Gew.-% bis 3 Gew.-%, vorzugsweise 0,2 Gew.-% bis 2,5 Gew.-%, auf, bezogen auf das Gesamtgewicht der strahlungshärtbaren, vorzugsweise UV-härtbaren, Zusammensetzung.

In weiterer Ausgestaltung der Erfindung ist die strahlungshärtbare, vorzugsweise UV-härtbare, Zusammensetzung frei von einem Aminsynergisten. Insoweit hat sich ferner überraschenderweise herausgestellt, dass auf die Verwendung eines Aminsynergisten verzichtet werden kann, obgleich die wenigstens eine Photoinitiatorverbindung der Formel I, insbesondere der Formel Ia, ein Photoinitiator vom Norrish Typ II darstellt, der üblicherweise nur in Kombination mit einem Aminsynergisten wirksam ist.

Unter dem Ausdruck "Aminsynergist" soll im Sinne der vorliegenden Erfindung eine Aminverbindung, die die Radikalbildung bei Photoinitiatoren vom Norrish Typ II unterstützt, verstanden werden.

In weiterer Ausgestaltung der Erfindung handelt es sich bei dem wenigstens einen reaktiven Monomer um wenigstens ein Acrylatmonomer, insbesondere wenigstens ein monofunktionelles Acrylatmonomer und/oder wenigstens ein oligofunktionelles, insbesondere bifunktionelles, Acrylatmonomer, und/oder um wenigstens ein Methacrylatmonomer, insbesondere wenigstens ein monofunktionelles Methacrylatmonomer und/oder wenigstens ein oligofunktionelles, insbesondere bifunktionelles, Methacrylatmonomer.

Der Ausdruck "wenigstens ein Acrylatmonomer, insbesondere wenigstens ein monofunktionelles Acrylatmonomer und/oder wenigstens ein oligofunktionelles, insbesondere bifunktionelles, Acrylatmonomer" kann im Sinne der vorliegenden Erfindung ein Acrylatmonomer, insbesondere monofunktionelles Acrylatmonomer und/oder oligofunktionelles, insbesondere bifunktionelles, Acrylatmonomer, d.h. ein Typ eines monofunktionellen Acrylatmonomers und/oder oligofunktionellen, insbesondere bifunktionellen, Acrylatmonomers, oder eine Vielzahl von unterschiedlichen Acrylatmonomeren, insbesondere monofunktionellen Acrylatmonomeren und/oder oligofunktionellen, insbesondere bifunktionellen, Acrylatmonomeren, d.h. zwei oder mehr unterschiedliche Acrylatmonomere, insbesondere monofunktionelle Acrylatmonomere und/oder oligofunktionelle, insbesondere bifunktionelle, Acrylatmonomere, bedeuten. Dementsprechend kann die strahlungshärtbare, vorzugsweise UV-härtbare, Zusammensetzung beispielsweise nur ein Acrylatmonomer, insbesondere nur ein monofunktionelles Acrylatmonomer und/oder oligofunktionelles, insbesondere bifunktionelles, Acrylatmonomer d.h. nur einen Typ eines Acrylatmonomers, insbesondere monofunktionellen Acrylatmonomers und/oder oligofunktionellen, insbesondere bifunktionellen, Acrylatmonomers oder eine Kombination oder Mischung von unterschiedlichen Acrylatmonomeren, insbesondere monofunktionellen Acrylatmonomeren und/oder oligofunktionellen, insbesondere bifunktionellen, Acrylatmonomeren aufweisen.

Unter dem Ausdruck "Acrylatmonomer" soll im Sinne der vorliegenden Erfindung ein Monomer mit wenigstens einer Acrylgruppe verstanden werden. Unter dem Ausdruck "monofunktionelles Acrylatmonomer" soll im Sinne der vorliegenden Erfindung ein Monomer mit lediglich einer Acrylgruppe verstanden werden. Unter dem Ausdruck "oligofunktionelles Acrylatmonomer" soll im Sinne der vorliegenden Erfindung ein Monomer mit einer Vielzahl von Acrylgruppen, d.h. zwei oder mehr Acrylgruppen, verstanden werden. Unter dem Ausdruck "bifunktionelles Acrylatmonomer" soll im Sinne der vorliegenden Erfindung ein Monomer mit (genau) zwei Acrylgruppen verstanden werden.

Der Ausdruck "wenigstens ein Methacrylatmonomer, insbesondere wenigstens ein monofunktionelles Methacrylatmonomer und/oder wenigstens ein oligofunktionelles, insbesondere bifunktionelles, Methacrylatmonomer" kann im Sinne der vorliegenden Erfindung ein Methacrylatmonomer, insbesondere monofunktionelles Methacrylatmonomer und/oder oligofunktionelles, insbesondere bifunktionelles, Methacrylatmonomer, d.h. ein Typ eines monofunktionellen Methacrylatmonomers und/oder oligofunktionellen, insbesondere bifunktionellen, Methacrylatmonomers, oder eine Vielzahl von unterschiedlichen Methacrylatmonomeren, insbesondere monofunktionellen Methacrylatmonomeren und/oder oligofunktionellen, insbesondere bifunktionellen, Methacrylatmonomeren, d.h. zwei oder mehr unterschiedliche Methacrylatmonomere, insbesondere monofunktionelle Methacrylatmonomere und/oder oligofunktionelle, insbesondere bifunktionelle, Methacrylatmonomere, bedeuten. Dementsprechend kann die strahlungshärtbare, vorzugsweise UV-härtbare, Zusammensetzung beispielsweise nur ein Methacrylatmonomer, insbesondere nur ein monofunktionelles Methacrylatmonomer und/oder oligofunktionelles, insbesondere bifunktionelles, Methacrylatmonomer, d.h. nur einen Typ eines Methacrylatmonomers, insbesondere monofunktionellen Methacrylatmonomers und/oder oligofunktionellen, insbesondere bifunktionellen, Methacrylatmonomers oder eine Kombination oder Mischung von unterschiedlichen Methacrylatmonomeren, insbesondere monofunktionellen Methacrylatmonomeren und/oder oligofunktionellen, insbesondere bifunktionellen, Methacrylatmonomeren aufweisen.

Unter dem Ausdruck "Methacrylatmonomer" soll im Sinne der vorliegenden Erfindung ein Monomer mit wenigstens einer Methacrylgruppe verstanden werden. Unter dem Ausdruck "monofunktionelles Methacrylatmonomer" soll im Sinne der vorliegenden Erfindung ein Monomer mit lediglich einer Methacrylgruppe verstanden werden. Unter dem Ausdruck "oligofunktionelles Methacrylatmonomer" soll im Sinne der vorliegenden Erfindung ein Monomer mit einer Vielzahl von Methacrylgruppen, d.h. zwei oder mehr Methacrylgruppen, verstanden werden. Unter dem Ausdruck "bifunktionelles Methacrylatmonomer" soll im Sinne der vorliegenden Erfindung ein Monomer mit (genau) zwei Methacrylgruppen verstanden werden.

Das wenigstens eine Acrylatmonomer, insbesondere das wenigstens eine monofunktionelle Acrylatmonomer und/oder das wenigstens eine oligofunktionelle, insbesondere bifunktionelle, Acrylatmonomer, ist vorzugsweise ausgewählt aus der Gruppe bestehend aus 2-Phenoxyethylacrylat, Isobornylacrylat, n-Octyldecylacrylat, Cyclic-trimethylol-propanformalacrylat, Laurylacrylat, alkoxyliertes Laurylacrylat wie ethoxyliertes Laurylacrylat, Isodecylacrylat, Caprolactonacrylat, 2-Phenoxyethylacrylat, 3,3,5-Trimethylcyclohexylacrylat, 4-Hydroxybutylacrylat, Isooctylacrylat, 2-(2-Ethoxyethoxy)ethylacrylat, Butylacrylat, Benzylacrylat, 2-(1,1-Dimethylethyl)cyclohexylacrylat, 3-(1,1-Dimethylethyl)cyclohexylacrylat, 4-(1,1-Dimethylethyl)cyclohexylacrylat, ethoxyliertes Phenylacrylat, alkoxyliertes Nonylphenolacrylat, (Octahydro-4,7-methano-1H-indendiyl)bis(methylen)diacrylat, Tricyclodecandimethanoldiacrylat, O-phenylphenoxyethylacrylat, Phenoxybenzylacrylat, Trimethylcyclohexylacrylat, Tridecylacrylat, 4-tert-Butylcyclohexylacrylat, Behenylacrylat, Stearylacrylat, Butandioldiacrylat, 1,2-Ethylenglykoldiacrylat, 1,12-Dodecanoldiacrylat, 1,10-Decandioldiacrylat, Esterdioldiacrylat, propoxyliertes 2-Neopentylglycoldiacrylat, Tris-(2-Hydroxyethyl)-isocyanurattriacrylat, propoxyliertes Neopentylglykoldiacrylat, Hexandioldiacrylat, Tripropylenglykoldiacrylat, Tetraethylenglykoldiacrylat, Dipropylenglykoldiacrylat, alkoxyliertes Hexandioldiacrylat, 3-Methyl-1,5-pentandioldiacrylat, alkoxyliertes Cyclohexandimethanoldiacrylat, Tricyclodecandimethanoldiacrylat, Trimethylolpropantriacrylat, alkoxyliertes Trimethylolpropantriacrylat, ethoxyliertes Trimethylolpropantriacrylat, Glycerolpropoxylattriacrylat, Pentaerythritoltriacrylat, Dipentaerythritolpentaacrylat, Dipentaerythritolhexaacrylat, ethoxyliertes Pentaerythritoltetraacrylat, Pentaerythritoltetraacrylat, Ditrimethylolpropantetraacrylat, Polyethylenglycoldiacrylate und Mischungen von wenigstens zwei der vorgenannten Acrylatmonomere, insbesondere monofunktionellen Acrylatmonomere und/oder oligofunktionellen, insbesondere bifunktionellen, Acrylatmonomere.

Das wenigstens eine Methacrylatmonomer, insbesondere das wenigstens eine monofunktionelle Methacrylatmonomer und/oder das wenigstens eine oligofunktionelle, insbesondere bifunktionelle, Methacrylatmonomer, ist vorzugsweise ausgewählt aus der Gruppe bestehend aus Isobornylmethacrylat, 4-tert.-Butylcyclohexylmethacrylat, Laurylmethacrylat, Isodecylmethacrylat, 2-Phenoxyethylmethacrylat, Isooctylmethacrylat, Benzylmethacrylat, Cyclohexylmethacrylat, 3,3,5-Trimethylcyclohexylmethacrylat, alkoxyliertes Nonylphenolmethacrylat, Hydroxyethylmethacrylat, 1,2-Ethylenglykoldimethacrylat, 1,12-Dodecanoldimethacrylat, Tris-(2-hydroxyethyl)-isocyanurattrimethacrylat, Hexandioldimethacrylat, ethoxyliertes Bisphenol-A-dimethacrylat, Trimethylolpropantrimethacrylat, Pentaerythritoltetramethacrylat, 2-N-Morpholinoethylmethacrylat und Mischungen von wenigstens zwei der vorgenannten Methacrylatmonomere, insbesondere monofunktionellen Methacrylatmonomere und/oder oligofunktionellen, insbesondere bifunktionellen, Methacrylatmonomere.

Alternativ oder in Kombination kann es sich bei dem wenigstens einen reaktiven Monomer um Acryloylmorpholin handeln.

In weiterer Ausgestaltung der Erfindung weist das wenigstens eine reaktive Monomer einen Anteil von maximal 95 Gew.-%, insbesondere 50 Gew.-% bis 95 Gew.-%, vorzugsweise 60 Gew.-% bis 90 Gew.-%, auf, bezogen auf das Gesamtgewicht der strahlungshärtbaren, vorzugsweise UV-härtbaren, Zusammensetzung.

Bei dem wenigstens einen reaktiven Oligomer handelt es sich vorzugsweise um wenigstens ein Acrylatoligomer, insbesondere wenigstens ein monofunktionelles Acrylatoligomer und/oder wenigstens ein oligofunktionelles, insbesondere bifunktionelles, Acrylatoligomer, und/oder um wenigstens ein Methacrylatoligomer, insbesondere wenigstens ein monofunktionelles Methacrylatoligomer und/oder wenigstens ein oligofunktionelles, insbesondere bifunktionelles, Methacrylatoligomer.

Der Ausdruck "wenigstens ein Acrylatoligomer, insbesondere wenigstens ein monofunktionelles Acrylatoligomer und/oder wenigstens ein oligofunktionelles, insbesondere bifunktionelles, Acrylatoligomer" kann im Sinne der vorliegenden Erfindung ein Acrylatoligomer, insbesondere monofunktionelles Acrylatoligomer und/oder oligofunktionelles, insbesondere bifunktionelles, Acrylatoligomer, d.h. ein Typ eines monofunktionellen Acrylatoligomers und/oder oligofunktionellen, insbesondere bifunktionellen, Acrylatoligomers, oder eine Vielzahl von unterschiedlichen Acrylatoligomeren, insbesondere monofunktionellen Acrylatoligomeren und/oder oligofunktionellen, insbesondere bifunktionellen, Acrylatoligomeren, d.h. zwei oder mehr unterschiedliche Acrylatoligomere, insbesondere monofunktionelle Acrylatoligomere und/oder oligofunktionelle, insbesondere bifunktionelle, Acrylatoligomere, bedeuten. Dementsprechend kann die strahlungshärtbare, vorzugsweise UV-härtbare, Zusammensetzung beispielsweise nur ein Acrylatoligomer, insbesondere nur ein monofunktionelles Acrylatoligomer und/oder oligofunktionelles, insbesondere bifunktionelles, Acrylatoligomer, d.h. nur einen Typ eines Acrylatoligomers, insbesondere monofunktionellen Acrylatoligomers und/oder oligofunktionellen, insbesondere bifunktionellen, Acrylatoligomers oder eine Kombination oder Mischung von unterschiedlichen Acrylatoligomeren, insbesondere monofunktionellen Acrylatoligomeren und/oder oligofunktionellen, insbesondere bifunktionellen, Acrylatoligomeren aufweisen.

Unter dem Ausdruck "Acrylatoligomer" soll im Sinne der vorliegenden Erfindung ein Oligomer mit mindestens einer Acrylgruppe verstanden werden. Unter dem Ausdruck "monofunktionelles Acrylatoligomer" soll im Sinne der vorliegenden Erfindung ein Oligomer mit lediglich einer Acrylgruppe verstanden werden. Unter dem Ausdruck "oligofunktionelles Acrylatoligomer" soll im Sinne der vorliegenden Erfindung ein Oligomer mit einer Vielzahl von Acrylgruppen, d.h. zwei oder mehr Acrylgruppen, verstanden werden. Unter dem Ausdruck "bifunktionelles Acrylatoligomer" soll im Sinne der vorliegenden Erfindung ein Oligomer mit (genau) zwei Acrylgruppen verstanden werden.

Der Ausdruck "wenigstens ein Methacrylatoligomer, insbesondere wenigstens ein monofunktionelles Methacrylatoligomer und/oder wenigstens ein oligofunktionelles, insbesondere bifunktionelles, Methacrylatoligomer" kann im Sinne der vorliegenden Erfindung ein Methacrylatoligomer, insbesondere monofunktionelles Methacrylatoligomer und/oder oligofunktionelles, insbesondere bifunktionelles, Methacrylatoligomer, d.h. ein Typ eines monofunktionellen Methacrylatoligomers und/oder oligofunktionellen, insbesondere bifunktionellen, Methacrylatoligomers, oder eine Vielzahl von unterschiedlichen Methacrylatoligomeren, insbesondere monofunktionellen Methacrylatoligomeren und/oder oligofunktionellen, insbesondere bifunktionellen, Methacrylatoligomeren, d.h. zwei oder mehr unterschiedliche Methacrylatoligomere, insbesondere monofunktionelle Methacrylatoligomere und/oder oligofunktionelle, insbesondere bifunktionelle, Methacrylatoligomere, bedeuten. Dementsprechend kann die strahlungshärtbare, vorzugsweise UV-härtbare, Zusammensetzung beispielsweise nur ein Methacrylatoligomer, insbesondere nur ein monofunktionelles Methacrylatoligomer und/oder oligofunktionelles, insbesondere bifunktionelles, Methacrylatoligomer, d.h. nur einen Typ eines Methacrylatoligomers, insbesondere monofunktionellen Methacrylatoligomers und/oder oligofunktionellen, insbesondere bifunktionellen, Methacrylatoligomers oder eine Kombination oder Mischung von unterschiedlichen Methacrylatoligomeren, insbesondere monofunktionellen Methacrylatoligomeren und/oder oligofunktionellen, insbesondere bifunktionellen, Methacrylatoligomeren aufweisen.

Unter dem Ausdruck "Methacrylatoligomer" soll im Sinne der vorliegenden Erfindung ein Oligomer mit wenigstens einer Methacrylgruppe verstanden werden. Unter dem Ausdruck "monofunktionelles Methacrylatoligomer" soll im Sinne der vorliegenden Erfindung ein Oligomer mit lediglich einer Methacrylgruppe verstanden werden. Unter dem Ausdruck "oligofunktionelles Methacrylatoligomer" soll im Sinne der vorliegenden Erfindung ein Oligomer mit einer Vielzahl von Methacrylgruppen, d.h. zwei oder mehr Methacrylgruppen, verstanden werden. Unter dem Ausdruck "bifunktionelles Methacrylatoligomer" soll im Sinne der vorliegenden Erfindung ein Oligomer mit (genau) zwei Methacrylgruppen verstanden werden.

Das wenigstens eine Acrylatoligomer, insbesondere das wenigstens eine monofunktionelle Acrylatoligomer und/oder das wenigstens eine oligofunktionelle, insbesondere bifunktionelle, Acrylatoligomer, ist vorzugsweise ausgewählt aus der Gruppe bestehend aus Epoxyacrylate, Polyesteracrylate, aliphatische Urethanacrylate, aromatische Urethanacrylate, Polyetheracrylate, Silikonacrylate, Melaminacrylate, dendritische Acrylate, aminmodifizierte Acrylate und Mischungen von wenigstens zwei der vorgenannten Acrylatoligomere.

Beispielsweise kann das wenigstens eine Acrylatoligomer ausgewählt sein aus der Gruppe bestehend aus Urethanacrylat, Methoxypolyethylenglykolmonoacrylat, Polyethylenglykoldiacrylat, aminmodifizierte Polyetheracrylate und Mischungen von wenigstens zwei der genannten Acrylatoligomere.

Das wenigstens eine Methacrylatoligomer, insbesondere das wenigstens eine monofunktionelle Methacrylatoligomer und/oder das wenigstens eine oligofunktionelle, insbesondere bifunktionelle, Methacrylatoligomer, ist vorzugsweise ausgewählt aus der Gruppe bestehend aus Epoxymethacrylate, Polyestermethacrylate, aliphatische Urethanmethacrylate, aromatische Urethanmethacrylate, Polyethermethacrylate Silikonmethacrylate, Melaminmethacrylate, dendritische Methacrylate, aminmodifizierte Methacrylate und Mischungen von wenigstens zwei der genannten Methacrylatoligomere.

Beispielsweise kann das wenigstens eine Methacrylatoligomer ausgewählt sein aus der Gruppe bestehend aus Methoxypolyethylenglykolmonomethacrylat, Polyethylenglykoldimethacrylat und Mischungen davon.

In weiterer Ausgestaltung der Erfindung weist das wenigstens eine reaktive Oligomer einen Anteil von < (gesprochen: kleiner) 8 Gew.-%, insbesondere 0,1 Gew.-% bis 6 Gew.-%, vorzugsweise 0,1 Gew.-% bis 5 Gew.-%, auf, bezogen auf das Gesamtgewicht der strahlungshärtbaren, vorzugsweise UV-härtbaren, Zusammensetzung. Dadurch ist vorteilhafterweise eine besonders saubere und insbesondere stabile Tropfenbildung der strahlungshärtbaren, vorzugsweise UV-härtbaren, Zusammensetzung während eines Druckvorganges erzielbar.

Ferner kann die strahlungshärtbare, vorzugsweise UV-härtbare, Zusammensetzung frei von einem reaktiven Oligomer, insbesondere Acrylatoligomer und/oder Methacrylatoligomer, insbesondere wie vorangehend beschrieben, sein.

In weiterer Ausgestaltung der Erfindung ist die strahlungshärtbare, vorzugsweise UV-härtbare, Zusammensetzung frei von N-Vinyl-Monomeren. Da N-Vinyl-Monomere ebenfalls gewissen gesundheitlichen Bedenken begegnen, kann auf diese Weise die Verwendbarkeit der Zusammensetzung für Bereiche, in denen erhöhte gesundheitliche Anforderungen zu erfüllen sind, wie beispielsweise beim Bedrucken von Lebensmittelverpackungen oder Spielzeugen, zusätzlich optimiert werden.

Bevorzugt weist die strahlungshärtbare, vorzugsweise UV-härtbare, Zusammensetzung wenigstens ein Farbmittel auf.

Vorzugsweise handelt es sich bei dem wenigstens einen Farbmittel, um wenigstens ein Pigment und/oder wenigstens einen Farbstoff.

Der Ausdruck "wenigstens ein Pigment" kann im Sinne der vorliegenden Erfindung ein Pigment, d.h. ein Typ eines Pigments, oder eine Vielzahl von unterschiedlichen Pigmenten, d.h. zwei oder mehr unterschiedliche Pigmente, bedeuten. Dementsprechend kann die strahlungshärtbare, vorzugsweise UV-härtbare, Zusammensetzung beispielsweise nur ein Pigment, d.h. nur einen Typ eines Pigments oder eine Kombination oder Mischung von unterschiedlichen Pigmenten aufweisen.

Das wenigstens eine Pigment kann ausgewählt sein aus der Gruppe bestehend aus anorganische Pigmente, organische Pigmente, Hohlkugel-Pigmente, wie beispielsweise polymere Hohlkugel-Pigmente, Aluminium-Pigmente, wie beispielsweise beschichtete Aluminium-Pigmente, und Mischungen von wenigstens zwei der vorgenannten Pigmente.

Die anorganischen Pigmente können insbesondere ausgewählt sein aus der Gruppe bestehend aus Titandioxid, Ruß, Bismutpigmente, Oxide, Hydroxide, Eisencyanblau, Ultramarin, Molybdate, Eisenoxidpigmente, Chromoxid, Mischphasenoxidpigmente, wie beispielsweise Rinmans Grün, und Mischungen von wenigstens zwei der vorgenannten anorganischen Pigmente.

Die organischen Pigmente können insbesondere ausgewählt sein aus der Gruppe bestehend aus Pigmente auf Basis von Quinacridonen, Pigmente auf Basis von Isoindolinen, Pigmente auf Basis von Phthalocyaninen, Pigmente auf Basis von Benzimidazolonen, Azopigmente, Monoazopigmente, Diazopigmente, polycyclische Pigmente und Mischungen von wenigstens zwei der vorgenannten organischen Pigmente.

Die beschichteten Aluminium-Pigmente können beispielsweise eine phosphorhaltige und insbesondere fluorverbindungsfreie Beschichtung aufweisen. Durch die Verwendung von beschichteten Aluminium-Pigmenten kann der strahlungshärtbaren, vorzugsweise UV-härtbaren, Tintenzusammensetzung vorteilhafterweise ein Metallic-Effekt verliehen werden.

Der Ausdruck "wenigstens ein Farbstoff" kann im Sinne der vorliegenden Erfindung ein Farbstoff, d.h. ein Typ eines Farbstoffs, oder eine Vielzahl von unterschiedlichen Farbstoffen, d.h. zwei oder mehr unterschiedliche Farbstoffe, bedeuten. Dementsprechend kann die strahlungshärtbare, vorzugsweise UV-härtbare, Zusammensetzung beispielsweise nur einen Farbstoff, d.h. nur einen Typ eines Farbstoffes oder eine Kombination oder Mischung von unterschiedlichen Farbstoffen aufweisen.

Der wenigstens eine Farbstoff kann insbesondere ausgewählt sein aus der Gruppe bestehend aus Solventfarbstoffe, Dispersfarbstoffe, Fettfarbstoffe und Mischungen von wenigstens zwei der genannten Farbstoffe.

Bevorzugt ist das wenigstens eine Farbmittel ausgewählt aus der Gruppe bestehend aus gelbes Farbmittel, oranges Farbmittel, rotes Farbmittel, magentafarbenes Farbmittel, violettes Farbmittel, grünes Farbmittel, cyanfarbenes Farbmittel, blaues Farbmittel, braunes Farbmittel, schwarzes Farbmittel und Mischungen von wenigstens zwei der vorgenannten Farbmittel.

Alternativ kann es sich bei dem wenigstens einen Farbmittel um ein weißes Farbmittel handeln.

Entsprechend kann die strahlungshärtbare, vorzugsweise UV-härtbare, Zusammensetzung gelb, orange, rot, magentafarben, violett, grün, cyanfarben, blau, braun oder schwarz sein. Alternativ kann die strahlungshärtbare, vorzugsweise UV-härtbare, Zusammensetzung weiß sein.

Ferner kann das wenigstens eine Farbmittel einen Anteil von 0,1 Gew.-% bis 50 Gew.-%, insbesondere 0,2 Gew.-% bis 30 Gew.-%, vorzugsweise 0,5 Gew.-% bis 25 Gew.-%, aufweisen, bezogen auf das Gesamtgewicht der strahlungshärtbaren, vorzugsweise UV-härtbaren, Zusammensetzung.

Alternativ kann es bevorzugt sein, dass die strahlungshärtbare, vorzugsweise UV-härtbare, Zusammensetzung pigmentfrei und/oder farbstofffrei, insbesondere farbmittelfrei, ist.

Ferner kann die strahlungshärtbare, vorzugsweise UV-härtbare, Zusammensetzung ein Lösungsmittel, insbesondere Wasser und/oder wenigstens ein organisches Lösungsmittel aufweisen.

Das Wasser kann einen Anteil von 1 Gew.-% bis 90 Gew.-%, insbesondere 10 Gew.-% bis 70 Gew.-%, vorzugsweise 30 Gew.-% bis 60 Gew.-%, aufweisen, bezogen auf das Gesamtgewicht der strahlungshärtbaren, vorzugsweise UV-härtbaren, Zusammensetzung.

Der Ausdruck "wenigstens ein organisches Lösungsmittel" kann im Sinne der vorliegenden Erfindung ein organisches Lösungsmittel, d.h. ein Typ eines organischen Lösungsmittels, oder eine Vielzahl von unterschiedlichen organischen Lösungsmitteln, d.h. zwei oder mehr unterschiedliche organische Lösungsmittel, bedeuten. Dementsprechend kann die strahlungshärtbare, vorzugsweise UV-härtbare, Zusammensetzung beispielsweise nur ein organisches Lösungsmittel, d.h. nur einen Typ eines organischen Lösungsmittels oder eine Kombination oder Mischung von unterschiedlichen organischen Lösungsmitteln aufweisen.

Das wenigstens eine organische Lösungsmittel kann ausgewählt sein aus der Gruppe bestehend aus Ethanol, Propanol, Isopropanol, Butanol, 1-Methoxyisopropylacetat, 2-Butoxyethylacetat, 2-Ethylbutylacetat, 1-Butylacetat, 1-Hexylacetat, 1,3-Dimethylbutylacetat, 2-(2-Butoxyethoxyethylacetat), 2-Butanolacetat, 2-Butoxyethylacetat, 2-Ethoxyethylacetat, 2-Ethylbutylacetat, 3-Methoxy-N-butylacetat, 2-Butanon, 2-Methylcyclohexanon, 2-Propanon, 2,6-Dimethylheptan-4-on, 3-Methylbutanon, 3,5,5-Trimethyl-2-cyclohexen-1-on, 3,5,5-Trimethylcyclohex-2-enon, 4-Hydroxybuttersäurelacton, 4-Methyl-2-pentanon, 4-Methylpentan-2-on, 5-Methyl-3-heptanon, Aceton, Amylethylketon, Anon, Butan-2-on, Butanon, Cyclohexanon, Diethylketon, Diisobutylketon, Dimethylketon, Ethylamylketon, Ethylisoamylketon, Methylaceton, Methylethylketon, Glykolethern und Mischungen von wenigstens zwei der vorgenannten organischen Lösungsmitteln.

Ferner kann das wenigstens eine organische Lösungsmittel einen Anteil von 1 Gew.-% bis 90 Gew.-%, insbesondere 10 Gew.-% bis 70 Gew.-%, vorzugsweise 30 Gew.-% bis 60 Gew.-%, aufweisen, bezogen auf das Gesamtgewicht der strahlungshärtbaren, vorzugsweise UV-härtbaren, Zusammensetzung.

Bevorzugt kann die strahlungshärtbare, vorzugsweise UV-härtbare, Zusammensetzung zum Beschichten, insbesondere Bedrucken, bevorzugt Digitalbedrucken, besonders bevorzugt Tintenstrahlbedrucken, von Substraten (Bedruckstoffen oder Druckträgern), insbesondere aus Glas, Kunststoff, Papier, Karton, Keramik oder Metall, verwendet werden. Das Substrat kann dabei beispielsweise als Flasche, Werbetafel, Spielzeug, Banner, Folie, Blech, Textilie, Verpackung wie Lebensmittelverpackung oder als (zur Dekoration) industriell gefertigter Gegenstand gestaltet sein.

Gemäß einem zweiten Aspekt betrifft die Erfindung ein Verfahren zum Beschichten, insbesondere Bedrucken, bevorzugt Digitalbedrucken, besonders bevorzugt Tintenstrahlbedrucken, eines Substrats, d.h. eines Bedruckstoffes oder Druckträgers, wobei
- eine strahlungshärtbare, vorzugsweise UV-härtbare, Zusammensetzung, insbesondere Tintenzusammensetzung oder Lackzusammensetzung, insbesondere Klarlackzusammensetzung, gemäß erstem Erfindungsaspekt auf wenigstens einen Teil einer Oberfläche des Substrats, d.h. des Bedruckstoffes oder Druckträgers, in Form einer Schicht, insbesondere Tinten-Schicht oder Lack-Schicht, aufgebracht wird und
- die aufgebrachte Schicht, insbesondere Tinten-Schicht oder Lack-Schicht, durch elektromagnetische Strahlung, vorzugsweise UV-Strahlung, gehärtet und/oder vernetzt wird.

Die strahlungshärtbare, vorzugsweise UV-härtbare, Zusammensetzung kann grundsätzlich nur teilweise, insbesondere nur selektiv, oder vollständig, d.h. vollflächig oder durchgehend, auf die Oberfläche des Substrats aufgebracht werden.

Bevorzugt wird die strahlungshärtbare, vorzugsweise UV-härtbare, Zusammensetzung in einem Digitaldruckverfahren, insbesondere Tintenstrahldruckverfahren, auf die Oberfläche des Substrats aufgebracht.

Unter dem Ausdruck "Digitaldruckverfahren" soll im Sinne der vorliegenden Erfindung ein Druckverfahren verstanden werden, bei dem das Druckbild direkt von einem Computer in eine Druckmaschine übertragen wird, ohne dass eine statische oder feste Druckform benutzt wird.

Unter dem Ausdruck "Tintenstrahldruckverfahren" soll im Sinne der vorliegenden Erfindung ein Verfahren verstanden werden, bei dem kleine Tröpfchen flüssiger Tinte erzeugt und auf ein Substrat aufgebracht werden. Dabei gibt es zum einen die Möglichkeit, einen kontinuierlichen Tintenstrahl zu erzeugen (Continuous Ink Jet, CIJ), oder zum anderen die Möglichkeit der diskontinuierlichen Erzeugung einzelner Tropfen, die nur bei Bedarf erzeugt und auf das Substrat übertragen werden (Drop-On Demand, DOD).

Bevorzugt wird vor dem Aufbringen der strahlungshärtbaren, vorzugsweise UV-härtbaren, Zusammensetzung eine strahlungshärtbare, vorzugsweise UV-härtbare, Primerzusammensetzung auf wenigstens einen Teil der Oberfläche des Substrats in Form einer Primerschicht aufgebracht und anschließend die strahlungshärtbare, vorzugsweise UV-härtbare, Zusammensetzung in Form einer Schicht auf die auf die Oberfläche des Substrats aufgebrachte Primerschicht aufgebracht. Dabei kann die strahlungshärtbare, vorzugsweise UV-härtbare, Primerzusammensetzung grundsätzlich (ebenfalls) nur teilweise, insbesondere nur selektiv, oder vollständig, d.h. vollflächig oder durchgehend, auf die Oberfläche des Substrats aufgebracht werden.

Ferner kann das Substrat, vorzugsweise zur Änderung seiner Oberflächeneigenschaften, vor dem Aufbringen der strahlungshärtbaren, vorzugsweise UV-härtbaren, Zusammensetzung und/oder vor dem Aufbringen der strahlungshärtbaren, vorzugsweise UV-härtbaren, Primerzusammensetzung vorbehandelt werden. Beispielsweise kann das Substrat durch Beflammen und/oder flammenpyrolytisches Beschichten, insbesondere Silikatisieren, vorbehandelt werden. Eine solche Vorbehandlung kann beispielsweise zweckmäßig sein, wenn das Substrat aus Glas besteht.

Bezüglich weiterer Merkmale und Vorteile des Verfahrens wird zur Vermeidung von Wiederholungen vollständig auf die im Rahmen des ersten Erfindungsaspekts gemachten Ausführungen Bezug genommen. Die dort insbesondere in Bezug auf die strahlungshärtbare, vorzugsweise UV-härtbare, Zusammensetzung beschriebenen Merkmale und Vorteile gelten sinngemäß auch für das Verfahren gemäß zweitem Erfindungsaspekt.

Gemäß einem dritten Aspekt betrifft die Erfindung ein Substrat, d.h. einen Bedruckstoff oder Druckträger, das wenigstens teilweise, insbesondere nur teilweise oder vollständig, d.h. vollflächig oder durchgehend, mit einer strahlungshärtbaren, vorzugsweise UV-härtbaren, Zusammensetzung gemäß erstem Erfindungsaspekt beschichtet, insbesondere bedruckt, bevorzugt digitalbedruckt, besonders bevorzugt tintenstrahlbedruckt, ist.

Das Substrat kann aus Glas, Kunststoff, Papier, Karton, Keramik oder Metall bestehen. Insbesondere kann das Substrat als Flasche, Werbetafel, Spielzeug, Banner, Folie, Blech, Textilie, Verpackung wie Lebensmittelverpackung oder als (zur Dekoration) industriell gefertigter Gegenstand gestaltet sein.

Bezüglich weiterer Merkmale und Vorteile des Substrats wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf die strahlungshärtbare, vorzugsweise UV-härtbare, Zusammensetzung sowie das Substrat beschriebenen Merkmale und Vorteile gelten sinngemäß auch für das Substrat gemäß drittem Erfindungsaspekt.

Gemäß einem vierten Aspekt betrifft die Erfindung die Verwendung einer strahlungshärtbaren, vorzugsweise UV-härtbaren, Zusammensetzung gemäß erstem Erfindungsaspekt zum Beschichten, insbesondere Bedrucken, bevorzugt Digitalbedrucken, besonders bevorzugt Tintenstrahlbedrucken, eines Substrats.

Das Substrat kann aus Glas, Kunststoff, Papier, Karton, Keramik oder Metall bestehen. Insbesondere kann das Substrat als Flasche, Werbetafel, Spielzeug, Banner, Folie, Blech, Textilie, Verpackung wie Lebensmittelverpackung oder als (zur Dekoration) industriell gefertigter Gegenstand gestaltet sein.

Bezüglich weiterer Merkmale und Vorteile der Verwendung wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf die strahlungshärtbare, vorzugsweise UV-härtbare, Zusammensetzung sowie das Substrat beschriebenen Merkmale und Vorteile gelten sinngemäß auch für die Verwendung gemäß viertem Erfindungsaspekt.

Gemäß einem fünften Aspekt betrifft die Erfindung ein Kit, insbesondere zum Beschichten, insbesondere Bedrucken, bevorzugt Digitalbedrucken, besonders bevorzugt Tintenstrahlbedrucken, eines Substrats, d.h. eines Bedruckstoffes oder Druckträgers.

Das Kit weist räumlich voneinander getrennt
- wenigstens eine strahlungshärtbare, vorzugsweise UV-härtbare, Zusammensetzung, insbesondere nur eine strahlungshärtbare, vorzugsweise UV-härtbare, Zusammensetzung oder eine Vielzahl von strahlungshärtbaren, vorzugsweise UV-härtbaren, Zusammensetzungen, d.h. zwei oder mehr strahlungshärtbare, vorzugsweise UV-härtbare, Zusammensetzungen, gemäß erstem Erfindungsaspekt und
- wenigstens eine weitere Komponente auf.

Die wenigstens eine weitere Komponente ist vorzugsweise ausgewählt aus der Gruppe bestehend aus UV-Lampe, UV-LED-Lampe, LED-UV-Trocknereinheit, Digitaldruckkopf, Digitaldruckanlage, UV-härtbare Primerzusammensetzung, Lackzusammensetzung wie Unterdrucklackzusammensetzung, thermische Trocknereinheit, Zuführvorrichtungen und Entnahmevorrichtung, Ansteuerelektronik und Kombinationen von wenigstens zwei der vorgenannten weiteren Komponenten.

Bei der UV-Lampe kann es sich beispielsweise um einen Quecksilberstrahler handeln.

Bei dem Digitaldruckkopf handelt es sich vorzugsweise um einen Tintenstrahldruckkopf.

Bei der Digitaldruckanlage handelt es sich vorzugsweise um eine Tintenstrahldruckanlage.

Unter dem Ausdruck "Unterdrucklack" soll im Sinne der vorliegenden Erfindung ein Klarlack mit Primerfunktion verstanden werden.

Bezüglich weiterer Merkmale und Vorteile des Kits wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf die strahlungshärtbare, vorzugsweise UV-härtbare, Zusammensetzung sowie das Substrat beschriebenen Merkmale und Vorteile gelten sinngemäß auch für das Kit gemäß fünftem Erfindungsaspekt.

Gemäß einem sechsten Aspekt betrifft die Erfindung einen Tintensatz, insbesondere zum Beschichten, insbesondere Bedrucken, bevorzugt Digitalbedrucken, besonders bevorzugt Tintenstrahlbedrucken, eines Substrats, d.h. eines Bedruckstoffes oder Druckträgers.

Der Tintensatz weist eine Vielzahl von strahlungshärtbaren, vorzugsweise UV-härtbaren, Tintenzusammensetzungen, d.h. zwei oder mehr strahlungshärtbare, vorzugsweise UV-härtbare, Tintenzusammensetzungen, gemäß erstem Erfindungsaspekt auf oder besteht aus einer Vielzahl von strahlungshärtbaren, vorzugsweise UV-härtbaren, Tintenzusammensetzungen, d.h. zwei oder mehr strahlungshärtbaren, vorzugsweise UV-härtbaren, Tintenzusammensetzungen, gemäß erstem Erfindungsaspekt. Die strahlungshärtbaren, vorzugsweise UV-härtbaren, Tintenzusammensetzungen können dabei gleich oder verschieden zueinander sein. Vorzugsweise sind die strahlungshärtbaren, vorzugsweise UV-härtbaren, Tintenzusammensetzungen verschieden zueinander. Bevorzugt sind die strahlungshärtbaren, vorzugsweise UV-härtbaren, Tintenzusammensetzungen in Bezug auf das wenigstens eine Farbmittel und/oder einen Anteil des wenigstens einen Farbmittels, bezogen auf das Gesamtgewicht der strahlungshärtbaren, vorzugsweise UV-härtbaren, Tintenzusammensetzungen, verschieden zueinander.

Unter dem Ausdruck "Tintensatz" soll im Sinne der vorliegenden Erfindung ein Kit, aufweisend oder bestehend aus wenigstens zwei räumlich voneinander getrennten strahlungshärtbaren, vorzugsweise UV-härtbaren, Tintenzusammensetzungen gemäß erstem Erfindungsaspekt verstanden werden.

Bezüglich weiterer Merkmale und Vorteile des Tintensatzes wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf die strahlungshärtbare, vorzugsweise UV-härtbare, Tintenzusammensetzung sowie das Substrat beschriebenen Merkmale und Vorteile gelten sinngemäß auch für den Tintensatz gemäß sechstem Erfindungsaspekt.

Weitere Merkmale und Vorteile der Erfindung ergeben sich aus der nachfolgenden Beschreibung von bevorzugten Ausführungsformen in Form von Beispielen. Dabei können einzelne Merkmale jeweils für sich alleine oder in Kombination miteinander verwirklicht sein. Die nachfolgend beschriebenen Beispiele dienen lediglich der weiteren Erläuterung der Erfindung, ohne die Erfindung auf den Offenbarungsgehalt der Beispiele zu beschränken.

### BEISPIELTEIL

Rezepturen:
Beispiel 1 zeigt eine gebräuchliche, UV-LED-härtende Tintenrezeptur für die Verwendung in industriellen Tintenstrahldruckanlagen. Der Gehalt an Diphenylacylphosphinoxyd-Photoinitiatoren (hier: TPO) ist 15%.
Beispiel 2 zeigt eine erfindungsgemäße Tintenformulierung für dieselbe Anwendung wie Beispiel 1. Die Zusammensetzung ist frei von Diphenylacylphosphinoxyd-Photoinitiatoren. Der Gesamtgehalt an Phosphinoxyd-Photoinitiatoren ist 3,8%, der Gehalt an Photoinitiatoren insgesamt ist mit 5,8% sehr niedrig.

| | Beispiel 1 | Beispiel 2 |
|---|---|---|
| Oligomer | 1,3 | 3,5 |
| Mischung monofunktioneller Monomere | 67,9 | 74,9 |
| mehrfunktionelles Monomer | 4 | 4 |
| Additive | 0,2 | 0,2 |
| Farbpaste | 11,6 | 11,6 |
| TPO | 15 | |
| Omnirad 819 | | 3,8 |
| Speedcure 7010 | | 2 |

**Tests Reaktivität 8W LED von Fa. Hönle, Substrat Leneta Deckprüfkarten**

| | Lampeneinstellung in % | Bandgeschwindigkeit in m/min | Test Klebrigkeit |
|---|---|---|---|
| Beispiel 1 | 25 | 25 | leicht klebrige Oberfläche |
| Beispiel 2 | 25 | 25 | leicht klebrige Oberfläche |
| Beispiel 1 | 50 | 25 | berührungstrocken |
| Beispiel 2 | 50 | 25 | berührungstrocken |
| Beispiel 1 | 100 | 10 | berührungstrocken |
| Beispiel 2 | 100 | 10 | berührungstrocken |

Der Vergleich der Beispiele 1 und 2 ergibt keine Beeinträchtigung der Reaktivität durch die geänderte Photoinitiatorenzusammensetzung.

## Patentansprüche

1. Strahlungshärtbare, vorzugsweise UV-härtbare, Zusammensetzung, aufweisend
- wenigstens ein reaktives Monomer und/oder wenigstens ein reaktives Oligomer und
- wenigstens eine Photoinitiatorverbindung,
**dadurch gekennzeichnet, dass** die Zusammensetzung frei von einer Diphenylacylphosphinoxidverbindung ist und die wenigstens eine Photoinitiatorverbindung nachfolgende Formel I besitzt: 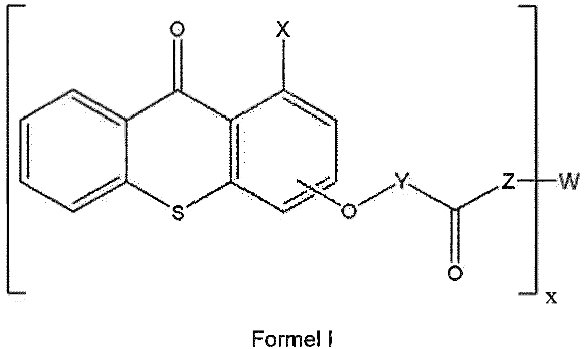 wobei
- X ein Halogenatom bedeutet,
- Y eine Alkylen- oder Alkenylengruppe bedeutet,
- Z eine Gruppe der Formel -[OCH₂CH₂]_{y}-, -[OCH₂CH₂CH₂CH₂]_{y}- oder -[OCH(CH₃)CH₂]_{y}-, wobei y eine ganze Zahl von 1 bis 20 bedeutet, oder eine Gruppe der Formel -[O(CH₂)_{b}CO]_{y}- oder -[O(CH₂)_{b}CO]_{(y-1)}-[O(CHR"CHR')ₐ]-bedeutet, wobei b eine ganze Zahl von 4 bis 5 und y eine ganze Zahl von 1 bis 20 bedeutet,
- W einen Rest einer Polyhydroxyverbindung bedeutet und
- x eine ganze Zahl > 1 bedeutet, wobei an die Gruppe W gebundene Gruppierungen gleich oder voneinander verschieden sein können.

2. Strahlungshärtbare Zusammensetzung nach Anspruch 1, **dadurch gekennzeichnet, dass** die Zusammensetzung ferner wenigstens eine Acylphosphinoxidverbindung aufweist, die ausgewählt ist aus der Gruppe bestehend aus Ethyl-(2,4,6-Trimethylbenzoyl)phenylphosphinat, Isobutyldibenzoylphosphinoxid, Methyl-(2,6-dimethoxybenzoyl)phenylphosphinoxid, Methylisobutyryl-methylphosphinat, Isopropylpivaloylphenylphosphinat, Methyl-p-toluoylphenylphosphinat, Methyl-o-toluoylphenylphosphinat, Methyl-2,4-dimethylbenzoyldiphenylphosphinat, Isopropyl-p-tert-butylbenzoylphenylphosphinat, Methyl-acryloylphenylphosphinat, o-Toluoylphenylphosphinoxid, Vinyl-pivaloylphenylphosphinat, Methyl-pivaloylphenylphosphinat, Isopropyl-pivaloylphenylphosphinat, Bis(2,6-dichlorobenzoyl)phenylphosphinoxid, Bis(2,6-dichlorobenzoyl)-2,5-dimethylphenylphosphinoxid, Bis(2,6-dichlorobenzoyl)-4-ethoxyphenylphosphinoxid, Bis(2,6-dichlorobenzoyl)-4-propylphenylphosphinoxid, Bis(2,6-dichloro-benzoyl)-2-naphtylphosphinoxid, Bis(2,6-dichlorobenzoyl)-1-naphtylphosphinoxid, Bis(2,6- dichlorobenzoyl)-4-chlorophenylphosphinoxid, Bis(2,6-dichlorobenzoyl)-2,4-dimethoxyphenylphosphinoxid, Bis(2,6-dichlorobenzoyl)ethylphosphinoxid, Bis(2,6- dichlorobenzoyl)-4-octylphenylphosphinoxid, Bis(2,4,6-trimethylbenzoyl)phenylphosphinoxid, Bis(2,4,6-trimethylbenzoyl)-2,5-dimethylphenylphosphinoxid, Bis(2,6-dichloro-3,4,5-trimethoxybenzoyl)-2,5-dimethylphenylphosphinoxid, Bis(2,6-dichloro-3,4,5-trimethoxybenzoyl)-4-ethoxyphenylphosphinoxid, Bis(2-methyl-1-naphthyl)-2,5-dimethylphenylphosphinoxid, Bis(2-methyl-1-naphthyl)-4-ethoxyphenylphosphinoxid, Bis(2-methyl-1-naphthyl)-2-naphthylphosphinoxid, Bis(2-methyl-1-naphthyl)-4-propylphenylphosphinoxid, Bis(2-methyl-1-naphthyl)-2,5-trimethylphenylphosphinoxid, Bis(2-methoxy-1 -naphthyl)-4-ethoxyphenylphosphinoxid, Bis(2-chloro-1-naphthyl)-2,5-dimethylphenylphosphinoxid, Bis(2,6-dimethoxybenzoyl)-2,4,6-trimethylpentylphosphinoxid und Mischungen von wenigstens zwei der vorgenannten Acylphosphinoxidverbindungen.

3. Strahlungshärtbare Zusammensetzung nach Anspruch 2, **dadurch gekennzeichnet, dass** die wenigstens eine Acylphosphinoxidverbindung einen Anteil von 0,1 Gew.-% bis 10 Gew.-%, insbesondere 0,1 Gew.-% bis 6 Gew.-%, vorzugsweise 0,1 Gew.-% bis 4 Gew.-%, aufweist, bezogen auf das Gesamtgewicht der Zusammensetzung.

4. Strahlungshärtbare Zusammensetzung nach einem der vorhergehenden Ansprüche, **dadurch gekennzeichnet, dass** X in der Formel I ein Chloratom bedeutet.

5. Strahlungshärtbare Zusammensetzung nach einem der vorhergehenden Ansprüche, **dadurch gekennzeichnet, dass** Y in der Formel I eine Methylengruppe, d.h. eine -CH₂-Gruppe, bedeutet.

6. Strahlungshärtbare Zusammensetzung nach einem der vorhergehenden Ansprüche, **dadurch gekennzeichnet, dass** Z in der Formel I eine Gruppe -[OCH(CH₃)CH₂]_{y}-bedeutet, wobei y eine ganze Zahl von 1 bis 20 bedeutet.

7. Strahlungshärtbare Zusammensetzung nach einem der vorhergehenden Ansprüche, **dadurch gekennzeichnet, dass** W in der Formel I einen Rest von Pentaerythrit bedeutet.

8. Strahlungshärtbare Zusammensetzung nach einem der vorhergehenden Ansprüche, **dadurch gekennzeichnet, dass** die Gruppierung -YCO-Z- in der wenigstens einen Photoinitiatorverbindung der Formel I in einer para-Position relativ zur Position von X an die Thioxanthongruppierung gebunden ist.

9. Strahlungshärtbare Zusammensetzung nach einem der vorhergehenden Ansprüche, **dadurch gekennzeichnet, dass** die wenigstens eine Photoinitiatorverbindung ein Molekulargewicht von < 2000 g/mol aufweist.

10. Strahlungshärtbare Zusammensetzung nach einem der vorhergehenden Ansprüche, **dadurch gekennzeichnet, dass** die wenigstens eine Photoinitiatorverbindung nachfolgende Formel la besitzt: 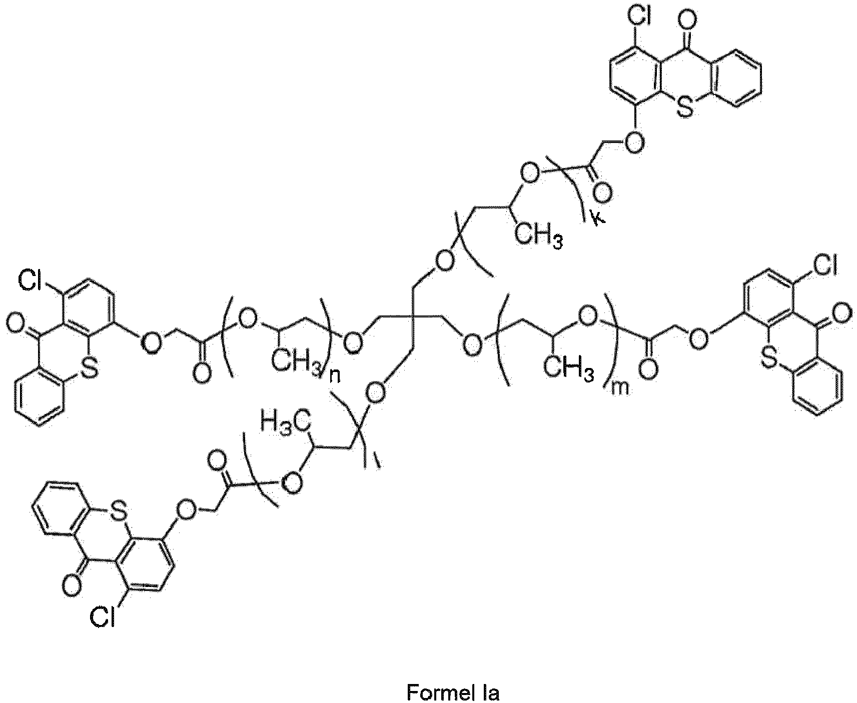 wobei k, l, m und n unabhängig voneinander jeweils eine ganze Zahl von 1 bis 20 bedeuten.

11. Strahlungshärtbare Zusammensetzung nach einem der vorhergehenden Ansprüche, **dadurch gekennzeichnet, dass** die Zusammensetzung frei von einem Aminsynergisten ist.

12. Strahlungshärtbare Zusammensetzung nach einem der vorhergehenden Ansprüche, **dadurch gekennzeichnet, dass** das wenigstens eine reaktive Monomer wenigstens ein Acrylatmonomer und/oder wenigstens ein Methacrylatmonomer ist, insbesondere ausgewählt aus der Gruppe bestehend aus 2-Phenoxyethylacrylat, Isobornylacrylat, n-Octyldecylacrylat, Cyclic-trimethylol-propanformalacrylat, Laurylacrylat, alkoxyliertes Laurylacrylat wie ethoxyliertes Laurylacrylat, Isodecylacrylat, Caprolactonacrylat, 2-Phenoxyethylacrylat, 3,3,5-Trimethylcyclohexylacrylat, 4-Hydroxybutylacrylat, Isooctylacrylat, 2-(2-Ethoxyethoxy)ethylacrylat, Butylacrylat, Benzylacrylat, 2-(1,1-Dimethylethyl)cyclohexylacrylat, 3-(1,1-Dimethylethyl)cyclohexylacrylat, 4-(1,1-Dimethylethyl)cyclohexylacrylat, ethoxyliertes Phenylacrylat, alkoxyliertes Nonylphenolacrylat, (Octahydro-4,7-methano-1H-indendiyl)bis(methylen)diacrylat, Tricyclodecandimethanoldiacrylat, O-phenylphenoxyethylacrylat, Phenoxybenzylacrylat, Trimethylcyclohexylacrylat, Tridecylacrylat, 4-tert-Butylcyclohexylacrylat, Behenylacrylat, Stearylacrylat, Butandioldiacrylat, 1,2-Ethylenglykoldiacrylat, 1,12-Dodecanoldiacrylat, 1,10-Decandioldiacrylat, Esterdioldiacrylat, propoxyliertes 2-Neopentylglycoldiacrylat, Tris-(2-Hydroxyethyl)-isocyanurattriacrylat, propoxyliertes Neopentylglykoldiacrylat, Hexandioldiacrylat, Tripropylenglykoldiacrylat, Tetraethylenglykoldiacrylat, Dipropylenglykoldiacrylat, alkoxyliertes Hexandioldiacrylat, 3-Methyl-1,5-pentandioldiacrylat, alkoxyliertes Cyclohexandimethanoldiacrylat, Tricyclodecandimethanoldiacrylat, Trimethylolpropantriacrylat, alkoxyliertes Trimethylolpropantriacrylat, ethoxyliertes Trimethylolpropantriacrylat, Glycerolpropoxylattriacrylat, Pentaerythritoltriacrylat, Dipentaerythritolpentaacrylat, Dipentaerythritolhexaacrylat, ethoxyliertes Pentaerythritoltetraacrylat, Pentaerythritoltetraacrylat, Ditrimethylolpropantetraacrylat, Polyethylenglycoldiacrylate, Isobornylmethacrylat, 4-tert.-Butylcyclohexylmethacrylat, Laurylmethacrylat, Isodecylmethacrylat, 2-Phenoxyethylmethacrylat, Isooctylmethacrylat, Benzylmethacrylat, Cyclohexylmethacrylat, 3,3,5-Trimethylcyclohexylmethacrylat, alkoxyliertes Nonylphenolmethacrylat, Hydroxyethylmethacrylat, Tetrahydrofurfurylmethacrylat, 1,2-Ethylenglykoldimethacrylat, 1,12-Dodecanoldimethacrylat, Tris-(2-hydroxyethyl)-isocyanurattrimethacrylat, Hexandioldimethacrylat, ethoxyliertes Bisphenol-A-dimethacrylat, Trimethylolpropantrimethacrylat, Pentaerythritoltetramethacrylat, 2-N-Morpholinoethylmethacrylat und Mischungen von wenigstens zwei der vorgenannten Acrylatmonomere und/oder Methacrylatmonomere.

13. Strahlungshärtbare Zusammensetzung nach einem der vorhergehenden Ansprüche, **dadurch gekennzeichnet dass** das wenigstens eine reaktive Oligomer wenigstens ein Acrylatoligomer und/oder wenigstens ein Methacrylatoligomer ist, insbesondere ausgewählt aus der Gruppe bestehend aus Epoxyacrylate, Polyesteracrylate, aliphatische Urethanacrylate, aromatische Urethanacrylate, Polyetheracrylate, Silikonacrylate, Melaminacrylate, dendritische Acrylate, aminmodifizierte Acrylate, Epoxymethacrylate, Polyestermethacrylate, aliphatische Urethanmethacrylate, aromatische Urethanmethacrylate, Polyethermethacrylate Silikonmethacrylate, Melaminmethacrylate, dendritische Methacrylate, aminmodifizierte Methacrylate und Mischungen von wenigstens zwei der vorgenannten Acrylatoligomere und/oder Methacrylatoligomere.

14. Strahlungshärtbare Zusammensetzung nach einem der vorhergehenden Ansprüche, **dadurch gekennzeichnet, dass**
- die wenigstens eine Photoinitiatorverbindung der Formel I einen Anteil von < 3 Gew.-%, insbesondere 0,1 Gew.-% bis 3 Gew.-%, vorzugsweise 0,2 Gew.-% bis 2,5 Gew.-%, aufweist, bezogen auf das Gesamtgewicht der Zusammensetzung,
und/oder
- das wenigstens eine reaktive Monomer einen Anteil von maximal 95 Gew.-%, insbesondere 50 Gew.-% bis 95 Gew.-%, vorzugsweise 60 Gew.-% bis 90 Gew.-%, aufweist, bezogen auf das Gesamtgewicht der Zusammensetzung, und/oder
- das wenigstens eine reaktive Oligomer einen Anteil von < 8 Gew.-%, insbesondere 0,1 Gew.-% bis 6 Gew.-%, vorzugsweise 0,1 Gew.-% bis 5 Gew.-%, aufweist, bezogen auf das Gesamtgewicht der Zusammensetzung.

15. Strahlungshärtbare Zusammensetzung nach einem der vorhergehenden Ansprüche, **dadurch gekennzeichnet, dass** die Zusammensetzung frei von einem N-Vinyl-Monomer ist.
